# EUROPEAN PATENT SPECIFICATION

(11) **EP 3 283 191 B1**
(45) Date of publication and mention of the grant of the patent: **23.09.2020**
(21) Application number: 16723523.3
(22) Date of filing: 15.04.2016
(51) Int. Cl.: B01D 29/35, B01D 29/48, B01D 35/30

(54) **FILTER ASSEMBLY SUITABLE FOR FILTERING LIQUIDS AND/OR GASES**
FILTERANORDNUNG ZUR FILTRATION VON FLÜSSIGKEITEN UND/ODER GASEN
ENSEMBLE FILTRE APPROPRIÉ POUR LA FILTRATION DE LIQUIDES ET/OU DE GAZ

(30) Priority: 17.04.2015 BE 201505249
(43) Date of publication of application: 21.02.2018
(73) Proprietor: Verstraete, Marc, 8860 Lendelede (BE)
(72) Inventor: Verstraete, Marc, 8860 Lendelede (BE)
(74) Representative: Chielens, Kristof
(86) International application number: PCT/IB2016/052158
(87) International publication number: WO 2016/166714

(56) References cited:
- WO-A2-2010/116242
- FR-A- 1 419 894
- US-A- 2 000 490
- US-A- 3 552 552
- US-A- 4 009 109
- US-A- 4 459 208

## Description

The present invention relates, on the one hand, to a filter assembly suitable for filtering liquids and/or gases, as disclosed in the preamble of claim 1. The filter assembly according to the present invention is particularly suitable for removing filamentary impurities and also conforms to the standards of the EHEDG (European Hygienic Engineering & Design Group).

On the other hand, the present description relates to a filter housing suitable for accommodating a filter element. The filter housing will naturally also conform to the EHEDG standards.

Filtration is a separation method which is widely used in industry to, inter alia, separate solid and liquid substances from each other, to filter gases, etc. In a known form of filtration, a liquid flow is led through a filter element (filter medium).

Filter elements have already long been known and are freely commercially available. The filter elements are usually arranged in a filter housing having an inflow opening and an outflow opening. The filter housing is, in principle, tubular, with the inflow opening being situated on the underside in a standard manner. The outflow opening is provided in the tube wall in the vicinity of the upper side of the tube. In a filter assembly of this type, the filter elements are through-flowable from inside to out, or vice versa, during the filtration or from outside to in, or vice versa, during backwashing.

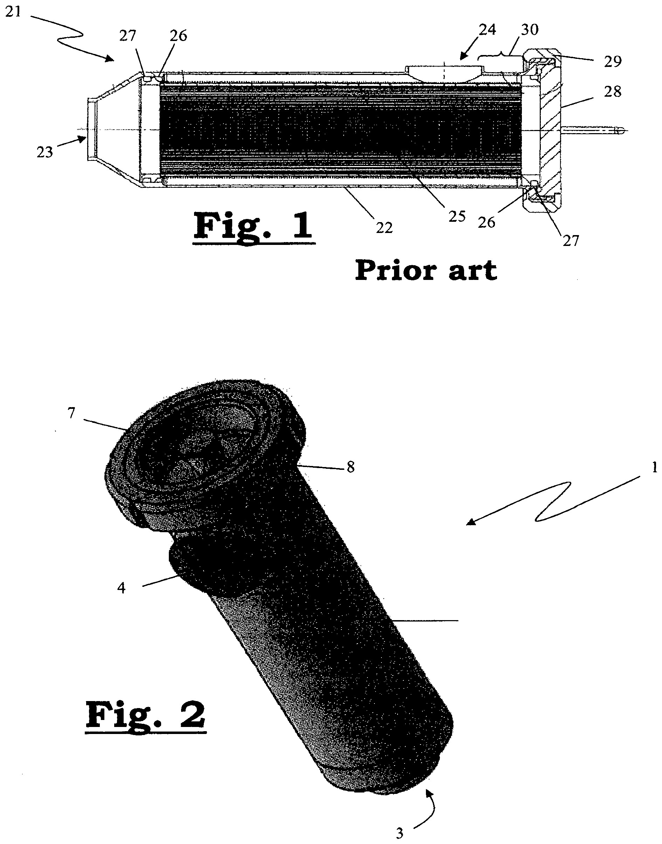

The filter elements accommodatable in the filter housing are tubular and composed of longitudinally running longitudinal bars around which a profiled wire is wound. Between one or more windings, filtering openings are formed. The number of longitudinal bars is dependent on the size of the filter element. In filter elements of this kind, the head ends are open. Usually, one (head) end is provided with a closed annular end piece and the other (head) end is provided with an annular end piece having an opening (a so-called end ring) through which the liquid to be filtered can flow into the filter body. This end ring is provided with a groove in which an O-shaped sealing ring is arranged, which provides a seal between the filter element and the filter housing. The filter element will of course be mounted in the filter housing in such a way that the end piece (end ring) with the (inlet) opening is situated at the location of the inflow opening of the filter housing. Instead of a closed end piece, the end in question can also, as illustrated in Figure 1, be closed by means of a cover in which an O-shaped sealing ring is arranged, which provides a seal between the filter housing and the cover. The cover is securely clamped to the filter housing by means of a nut.

A filter of this type is described in FR 1 419 894. In the filter assembly described, the filter element is secured at both ends by means of a covering sealing element (holder) in the form of a stop. The filter element slides, as it were, in the seals, which have a slightly larger diameter with respect to the filter element, as a result of which it comes to rest securely in the filter housing. The single entity is securely clamped with the aid of a bracket. By fixing the filter element in this way, particles can pile up in the dead spots of the filter housing, but also in the divisions/gaps between the filter element itself and the aforesaid sealing elements. As a result, there is a real risk of bacteria forming, which in turn can have a negative influence on the medium to be filtered (such as, for example, milk, water, etc.).

US 3,552,552 describes a liquied fertilizer strainer including a casing, a rod-type screen and a closure assembly. The casing includes an inlet portion, an outlet portion and a screen reception portion. The screen comprises a plurality of straight rods or wires of small diameter which are maintained in cylindrical form by end rings of nylon and a center external nylon ring. The screen is seated on neoprene washers at each end and is disposed at an angle.

US 4,009,109 describes an arrangement for filtering fluid flow in a conduit comprising a T connection including a body and a pair of aligned laterally extending projections form fluid passage means. An annular flange is formed on one of the lateral projections internally thereof and a flange is formed on the other lateral projection externally. A hollow annular filter member is positioned in the lateral projections and abuts the internal flange at one end and is closed. The filter member includes a core formed of generally trapezoidal or triangular shaped metal wire or strip material which has in the trapezoidal form two parallel surfaces joined by converging side surfaces.

Despite its good filtration results, a filter assembly in which the filter housing is provided with one of the above-mentioned filter elements has the drawback that the outflow opening of the filter housing is located a couple of centimetres away from the head end of the filter element. This leads to the risk of components which have been filtered out piling up between the outflow opening and cover, and between the end rings of the filter element and the filter housing, as a result of which microorganisms could develop at these locations, which is impermissible in the food sector, in particular the dairy industry. Owing to this risk of contamination, a filter assembly constructed in such a way will never be able to conform to the EHEDG standards.

It is now an object of the present invention to develop a filter assembly which will avert the risk of components which have been filtered out remaining in the filter element or filter housing. As a result, no microorganisms will therefore be able to develop in the filter assembly. A further object of the present invention is to develop a filter assembly which is suitable for use in the food industry and which will preferably conform to the EHEDG standards.

The object of the invention is achieved by providing a filter assembly suitable for filtering liquids and/or gases according to claim 1.

The supporting collar preferably extends at right angles to the inner wall of the filter housing. As a result of the fact that the sealing element is clamped against the supporting collar and the head end of the filter element adjoining the supporting collar by means of the tensioning means, a perfect seal is obtained.

By providing a sealing element on the end of the filter element, the outflow opening of the filter housing can be provided in the immediate vicinity of the head end of the filter element. In this way, there is no longer any space where material which has been filtered out can pile up, in contrast to the prior art shown in Figure 1. Moreover, it is possible to eliminate the so-called end rings (with the O-shaped sealing rings) which provide the seal between the filter element and the filter housing in the illustrated embodiment (see Figure 1) of the prior art and are welded at both ends of the filter element.

Both the filter housing and the filter element are preferably made from stainless steel. Due to the fact that the filter element is removable, it can be replaced in a simple manner, should this be necessary.

In a preferred embodiment of the filter assembly according to the invention, one head end of the filter element comprises an inlet opening for a liquid and/or gas to be filtered and the other head end of the filter element abuts the sealing element. Said inlet opening of course adjoins the inflow opening of the filter housing.

According to a more preferred embodiment of the filter assembly according to the invention, the filter housing comprises a tubular part and a conical part, wherein the inflow opening for a liquid to be filtered is provided at one end of the filter housing and adjoins the conical part, and wherein the outflow opening for the filtered liquid is provided in the wall of the tubular part at the location of the other end of the filter housing. In particular, the conical part of the filter housing comprises a supporting edge on which one head end of the filter element is supported. The filter element is supported on the supporting edge in such a way that it is not possible for material which has been filtered out to pile up in this location either.

In a particular embodiment of the filter assembly according to the invention, the sealing element is made from a silicone material. Of course, other plastic materials which are food-safe are also suitable. The thickness of the sealing element is preferably between 5 and 10 mm. In order to support the sealing element, the tubular part of the filter housing comprises a welding wire piece provided with the supporting collar directed inwards at right angles. As a result of the fact that the sealing element is clamped against the supporting collar by means of the tensioning means, a perfect seal is obtained. Said welding wire piece is the part of the filter housing provided at the location of the end of the filter housing situated opposite the inflow opening.

In order to secure the filter element in the filter housing, in a particular embodiment the tensioning means comprise a tensioning piece and a coupling nut. The sealing element, which rests on the supporting edge, is provided in the welding wire piece. The tensioning piece is provided on top of the sealing element. The tensioning piece and sealing element are secured in the filter housing by means of the coupling nut. Both the head end of the filter element and the supporting collar of the welding wire piece provide the seal by tightening the sealing element with the tensioning piece by means of the coupling nut, in such a way that the filter element is secured in the filter housing.

Another subject relates to a filter housing for filtering liquids and/or gases which is suitable for accommodating a tubular filter element with open head ends and a tube wall which acts as a filter, comprising an inflow opening and an outflow opening for a liquid and/or gas, a sealing element provided for closing one of the head ends of a filter element accommodated in the filter housing in a liquid-tight manner, and tensioning means for tensioning a filter element accommodated in the filter housing, wherein said sealing element is flat and wherein the filter housing further comprises a supporting collar for the sealing element, wherein the sealing element is clampable against a head end of the filter element and the supporting collar by means of the tensioning means.

The filter housing is particularly suitable for forming part of a filter assembly as described above.

In the following detailed description of the filter assembly according to the invention, said features and advantages of the invention are explained in more detail. It will be clear that the sole purpose of this description is to illustrate the general principles of the present invention by means of a concrete example, and that nothing in this description can therefore be interpreted as a limitation of the scope of the patent rights defined in the claims nor of the area of application of the present invention.

In the following description, reference numerals are used to refer to the attached figures, in which:
- *Figure 1**:* shows a cross section of a filter housing provided with a filter element according to the prior art;
- ***Figure 2******:*** is a perspective view of a filter assembly according to the invention;
- ***Figure 3******:*** shows a cross section of the filter assembly illustrated in Figure 2;
- ***Figure 4******:*** is a detail view of the area A circled in Figure 3;
- ***Figure 5******:*** is a detail view of the area B circled in Figure 3.

Figure 1 shows a filter assembly (21) according to the prior art. A filter assembly (21) of this type comprises a filter element (25) accommodatable in a filter housing (22). The filter housing (22) has an inflow opening (23) and an outflow opening (24). In the case of the known filter elements (25), an end ring (26) is welded onto both (head) ends of the filter element (25). Each end ring (26) is provided with a groove in which a so-called O-shaped sealing ring (27) made from plastic is arranged. This O-shaped sealing ring serves as a seal between the filter housing (22) and the cover (28) which will close the (head) end situated opposite the inflow opening (23). The cover (28) is securely clamped against the filter housing (22) by way of a nut (29). In a filter assembly (21) of this type, the outflow opening (24) is at a certain distance (a couple of centimetres) from the end of the filter housing, as a result of which an undesired growth of microorganisms can occur in the zone indicated by reference numeral 30, and also between the end rings (26) and the filter housing (22). Owing to the risk of contamination, a filter assembly (21) constructed in this way is not suitable for the food and/or dairy industry.

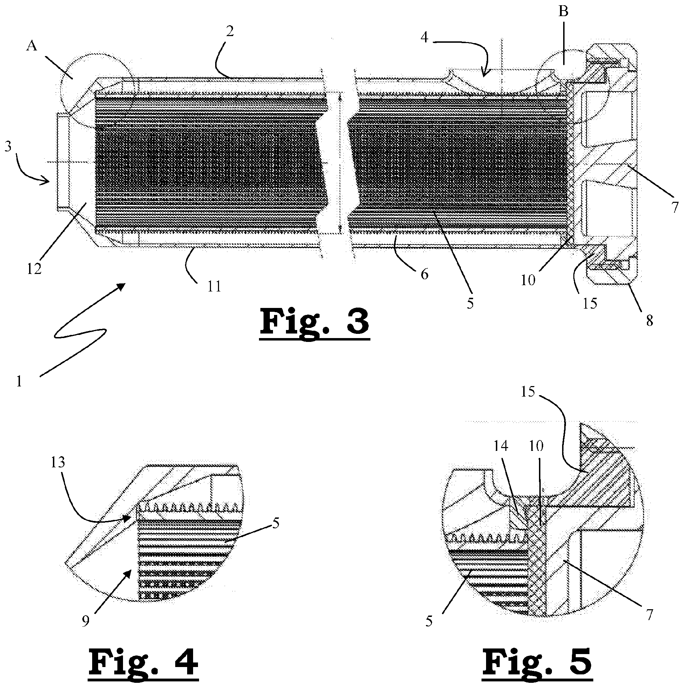

In order to prevent contamination by microorganisms, the patent proprietor has developed a new filter assembly (1) which is suitable for filtering liquids and/or gases. The filter assembly (1) according to the invention is illustrated in Figures 2 and 3 attached. In this case, the filter housing (2) is designed in such a way that it is not possible for products which have been filtered out to pile up in dead spots or ends of the filter assembly (1). The filter assembly (1) has a filter housing (2) with an inflow opening (3) and an outflow opening (4), a tubular filter element (5) accommodated in the filter housing (2) having open head ends and a tube wall (6) which acts as a filter. The filter element (5) itself is composed of a number of longitudinally running supporting wires on which a profiled wire is welded and with filtering openings being provided between one or more adjacent profiled wires. Filter elements in which the filtering surface is constructed in a different manner may optionally also be arranged in the relevant filter housing (2).

One head end of the filter element (5) serves as an inlet opening (9) and adjoins the inflow opening (3) of the filter housing (2). An innovation of the filter assembly (1) is that the other head end is closed by a specifically adapted closing means. The relevant (head) end is closed by a flat (plate-shaped) sealing element (10) which is preferably made from a silicone material. The sealing element (10) has a thickness of 5 to 10 mm, in a standard manner.

The sealing element (10) is clamped against the head end of the filter element (5) and a supporting collar (14) by means of tensioning means (7, 8). The supporting collar (14) is provided against the inner wall of the filter housing (2). The tensioning means comprise a tensioning piece (7) which is arranged together with the sealing element (10) in a welding wire piece (15) of the filter housing. The tensioning piece is secured in the filter housing (2) together with the sealing element by means of a coupling nut (8).

By producing the seal between the filter element (5) and the filter housing (2) in this way, it is now possible to provide the outflow opening of the filter housing (2) at the location of the end of the filter element (5) and, consequently, there is no longer any space where material which has been filtered out can pile up, leading to the possible development of microorganisms.

The filter housing (2) itself comprises a tubular part (11) and a conical part (12). The tubular part (11) comprises a welding wire piece (15) having a supporting collar (14). The inflow opening for a liquid to be filtered is provided at one end of the filter housing and adjoins the conical part. The outflow opening for the filtered liquid is provided in the wall of the tubular part, at the location of the other end of the filter housing (2). As shown in Figure 4, the conical part of the filter housing is provided with a supporting edge (13) on which one head end of the filter element (5) is supported. The filter element (5) is supported on the supporting edge (13) in such a way that it is not possible for material which has been filtered out to pile up in this location either. As shown in Figure 5, the tubular part (11) of the filter housing (2) is provided with a supporting collar (14) directed inwards at right angles which forms a single entity with the welding wire piece (15). The sealing element (10) is supported (rests) on this supporting collar.

The filter assembly (1) and the filter housing (2) according to the invention can be used, inter alia, in the food and dairy industry.

## Claims

1. Filter assembly (1) suitable for filtering liquids and/or gases, comprising:
- a filter housing (2) having an inflow opening (3) and an outflow opening (4) for a liquid and/or gas,
- a tubular filter element (5) accommodated in the filter housing (2), said tubular filter having a longitudinal axis, an open first head end, an open second head end and a tube wall (6) extending between said first head end and said second head end, said tube wall acting as a filter,
- tensioning means (7, 8) for tensioning the filter element (5) in the filter housing (2),
**characterized in that** the filter assembly (1) further comprises
- a sealing element (10) provided for closing said first head end, said sealing element (10) being flat and having a first surface and second surface opposite said first surface,
- a supporting collar (14) provided at the inner wall of said filter housing for the sealing element (10), wherein the sealing element (10) is clampable along said longitudinal axis against said first head end of the filter element (5) and the supporting collar (14) by means of the tensioning means (7, 8), wherein the tensioning means (7, 8) are pressing said first surface of the sealing element along said longitudinal axis so as to press a first peripheral portion of said second surface on the supporting collar (14) and another second portion of said second surface on said first head end.

2. Filter assembly (1) according to Claim 1, **characterized in that** the second head end of the filter element (5) comprises an inlet opening (9) for a liquid to be filtered.

3. Filter assembly (1) according to Claim 1 or 2, **characterized in that** the filter housing (2) comprises a tubular part (11) and a conical part (12), wherein the inflow opening (3) for a liquid and/or gas to be filtered is provided at one end of the filter housing (2) and adjoins the conical part (12), and wherein the outflow opening (4) for the filtered liquid and/or gas is provided in the wall of the tubular part (11) at the location of the other end.

4. Filter assembly (1) according to Claim 3, **characterized in that** the conical part (12) of the filter housing (2) comprises a supporting edge (13) on which the second head end of the filter element (5) is supported.

5. Filter assembly (1) according to Claim 3 or 4, **characterized in that** said supporting collar is directed inwards at right angles.

6. Filter assembly (1) according to Claim 5, **characterized in that** the tubular part (11) of the filter housing (2) comprises a welding wire piece (15) provided with the supporting collar (14) directed inwards at right angles.

7. Filter assembly (1) according to one of the preceding claims, **characterized in that** the sealing element (10) is made from a silicone material.

8. Filter assembly (1) according to one of the preceding claims, **characterized in that** the sealing element (10) has a thickness of between 5 and 10 mm.

9. Filter assembly (1) according to one of the preceding claims, **characterized in that** the tensioning means comprise a tensioning piece (7) and a coupling nut (8).

10. Filter assembly (1) according to one of the preceding claims, **characterized in that** the filter element (5) is replaceable.

11. Filter assembly (1) according to one of the preceding claims, **characterized in that** the filter housing (2) and the filter element (5) are made from stainless steel.

12. Filter assembly (1) according to one of the preceding claims, **characterized in that** the filter element (5) comprises a number of longitudinally running supporting wires on which a profiled wire is welded and wherein filtering openings are provided between one or more adjacent profiled wires.

## Patentansprüche

1. Filteranordnung (1), geeignet zum Filtern von Flüssigkeiten und/oder Gasen, umfassend:
- ein Filtergehäuse (2) mit einer Zuflussöffnung (3) und einer Ausflussöffnung (4) für eine Flüssigkeit und/oder ein Gas,
- ein rohrförmiges Filterelement (5), das in dem Filtergehäuse (2) untergebracht ist, wobei der rohrförmige Filter eine Längsachse, ein offenes erstes Kopfende, ein offenes zweites Kopfende und eine Rohrwand (6) aufweist, die sich zwischen dem ersten Kopfende und dem zweiten Kopfende erstreckt, wobei die Rohrwand als Filter wirkt,
- Spannmittel (7, 8) zum Spannen des Filterelements (5) im Filtergehäuse (2),
**dadurch gekennzeichnet, dass** die Filteranordnung (1) ferner umfasst:
ein Dichtungselement (10), das zum Verschließen des ersten Kopfendes vorgesehen ist, wobei das Dichtungselement (10) eben ist und eine erste Fläche und eine der ersten Fläche gegenüberliegende zweite Fläche aufweist,
einen Stützkragen (14), der an der Innenwand des Filtergehäuses für das Dichtungselement (10) vorgesehen ist, wobei das Dichtungselement (10) entlang der Längsachse gegen das erste Kopfende des Filterelements (5) und den Stützkragen (14) mittels der Spannmittel (7, 8) klemmbar ist, wobei die Spannmittel (7, 8) die erste Fläche des Dichtungselements entlang der Längsachse drücken, um so einen ersten Umfangsabschnitt der zweiten Fläche auf den Stützkragen (14) und einen weiteren zweiten Abschnitt der zweiten Fläche auf das erste Kopfende zu drücken.

2. Filteranordnung (1) nach Anspruch 1, **dadurch gekennzeichnet, dass** das zweite Kopfende des Filterelements (5) eine Einlassöffnung (9) für eine zu filternde Flüssigkeit umfasst.

3. Filteranordnung (1) nach Anspruch 1 oder 2, **dadurch gekennzeichnet, dass** das Filtergehäuse (2) einen rohrförmigen Teil (11) und einen konischen Teil (12) umfasst, wobei die Zuflussöffnung (3) für eine zu filternde Flüssigkeit und/oder ein zu filterndes Gas an einem Ende des Filtergehäuses (2) vorgesehen ist und an den konischen Teil (12) angrenzt, und wobei die Ausflussöffnung (4) für die gefilterte Flüssigkeit und/oder das gefilterte Gas in der Wand des rohrförmigen Teils (11) an der Stelle des anderen Endes vorgesehen ist.

4. Filteranordnung (1) nach Anspruch 3, **dadurch gekennzeichnet, dass** der konische Teil (12) des Filtergehäuses (2) einen Stützrand (13) umfasst, auf dem das zweite Kopfende des Filterelements (5) abgestützt ist.

5. Filteranordnung (1) nach Anspruch 3 oder 4, **dadurch gekennzeichnet, dass** der Stützkragen rechtwinklig nach innen gerichtet ist.

6. Filteranordnung (1) nach Anspruch 5, **dadurch gekennzeichnet, dass** der rohrförmige Teil (11) des Filtergehäuses (2) ein Schweißdrahtstück (15) umfasst, das mit dem rechtwinklig nach innen gerichteten Stützkragen (14) versehen ist.

7. Filteranordnung (1) nach einem der vorhergehenden Ansprüche, **dadurch gekennzeichnet, dass** das Dichtungselement (10) aus einem Silikonmaterial hergestellt ist.

8. Filteranordnung (1) nach einem der vorhergehenden Ansprüche, **dadurch gekennzeichnet, dass** das Dichtungselement (10) eine Dicke zwischen 5 und 10 mm aufweist.

9. Filteranordnung (1) nach einem der vorhergehenden Ansprüche, **dadurch gekennzeichnet, dass** die Spannmittel ein Spannstück (7) und eine Überwurfmutter (8) umfassen.

10. Filteranordnung (1) nach einem der vorhergehenden Ansprüche, **dadurch gekennzeichnet, dass** das Filterelement (5) austauschbar ist.

11. Filteranordnung (1) nach einem der vorhergehenden Ansprüche, **dadurch gekennzeichnet, dass** das Filtergehäuse (2) und das Filterelement (5) aus rostfreiem Stahl hergestellt sind.

12. Filteranordnung (1) nach einem der vorhergehenden Ansprüche, **dadurch gekennzeichnet, dass** das Filterelement (5) eine Anzahl von in Längsrichtung verlaufenden Stützdrähten umfasst, auf die ein Profildraht aufgeschweißt ist, und wobei Filteröffnungen zwischen einem oder mehreren aneinandergrenzenden Profildrähten vorgesehen sind.

## Revendications

1. Ensemble filtre (1) approprié pour filtrer des liquides et/ou des gaz, comprenant :
- un logement de filtre (2) ayant une ouverture d'écoulement entrant (3) et une ouverture d'écoulement sortant (4) pour un liquide et/ou un gaz,
- un élément filtre tubulaire (5) logé dans le logement de filtre (2), ledit filtre tubulaire ayant un axe longitudinal, une première extrémité de tête ouverte, une seconde extrémité de tête ouverte et une paroi de tube (6) s'étendant entre ladite première extrémité de tête et ladite seconde extrémité de tête, ladite paroi de tube servant de filtre,
- des moyens tendeurs (7, 8) pour tendre l'élément filtre (5) dans le logement de filtre (2),
**caractérisé en ce que** l'ensemble filtre (1) comprend en outre
- un élément d'étanchéité (10) prévu pour fermer ladite première extrémité de tête, ledit élément d'étanchéité (10) étant plat et ayant une première surface et une seconde surface opposée à ladite première surface,
- un collier de support (14) prévu sur la paroi intérieure dudit logement de filtre pour l'élément d'étanchéité (10), dans lequel l'élément d'étanchéité (10) peut être serrée le long dudit axe longitudinal contre ladite première extrémité de tête de l'élément filtre (5) et le collier de support (14) au moyen des moyens tendeurs (7, 8), dans lequel les moyens tendeurs (7, 8) pressent ladite première surface de l'élément d'étanchéité le long dudit axe longitudinal afin de presser une première portion périphérique de ladite seconde surface sur le collier de support (14) et une autre seconde portion de ladite seconde surface sur ladite première extrémité de tête.

2. Ensemble filtre (1) selon la revendication 1, **caractérisé en ce que** la seconde extrémité de tête de l'élément filtre (5) comprend une ouverture d'entrée (9) pour un liquide destiné à être filtré.

3. Ensemble filtre (1) selon la revendication 1 ou 2, **caractérisé en ce que** le logement de filtre (2) comprend une partie tubulaire (11) et une partie conique (12), dans lequel l'ouverture d'écoulement entrant (3) pour un liquide et/ou gaz destiné à être filtré est prévue à une extrémité du logement de filtre (2) et est contiguë à la partie conique (12), et dans lequel l'ouverture d'écoulement sortant (4) pour le liquide et/ou gaz filtré est prévue dans la paroi de la partie tubulaire (11) à l'emplacement de l'autre extrémité.

4. Ensemble filtre (1) selon la revendication 3, **caractérisé en ce que** la partie conique (12) du logement de filtre (2) comprend un bord de support (13) sur lequel la seconde extrémité de tête de l'élément filtre (5) est supportée.

5. Ensemble filtre (1) selon la revendication 3 ou 4, **caractérisé en ce que** ledit collier de support est dirigé vers l'intérieur à angle droit.

6. Ensemble filtre (1) selon la revendication 5, **caractérisé en ce que** la partie tubulaire (11) du logement de filtre (2) comprend une pièce de fil de soudure (15) pourvue du collier de support (14) dirigé vers l'intérieurs à angle droit.

7. Ensemble filtre (1) selon one des revendications précédentes, **caractérisé en ce que** l'élément d'étanchéité (10) est fait d'un matériau silicone.

8. Ensemble filtre (1) selon l'une des revendications précédentes, **caractérisé en ce que** l'élément d'étanchéité (10) a une épaisseur d'entre 5 et 10 mm.

9. Ensemble filtre (1) selon l'une des revendications précédentes, **caractérisé en ce que** les moyens tendeurs comprennent une pièce tendeuse (7) et un écrou de couplage (8).

10. Ensemble filtre (1) selon l'une des revendications précédentes, **caractérisé en ce que** l'élément filtre (5) est remplaçable.

11. Ensemble filtre (1) selon l'une des revendications précédentes, **caractérisé en ce que** le logement de filtre (2) et l'élément filtre (5) sont faits d'acier inoxydable.

12. Ensemble filtre (1) selon l'une des revendications précédentes, **caractérisé en ce que** l'élément filtre (5) comprend un nombre de fils de support s'étendant longitudinalement sur lesquels un fil profilé est soudé et dans lequel des ouvertures de filtration sont prévues entre un ou plusieurs fils profilés adjacents.
